# EUROPEAN PATENT APPLICATION

(11) **EP 2 146 334 A1**
(43) Date of publication of application: **20.01.2010**
(21) Application number: 08160766.5
(22) Date of filing: 18.07.2008
(51) Int. Cl.: G09B 9/00

(54) **Interactive rehabilitation device**

(71) Applicant: TNO Bedrijven B.V., 2628 VK Delft (NL)
(72) Inventor: Driessen Bart J.F., 2628 VK Delft (NL); Oderwald Michiel Peter, 2611 GP Delft (NL)
(74) Representative: Hatzmann, Martin

(57) **Abstract**

Interactive rehabilitation device, comprising a physical object to be moved by a patient, a detection arrangement configured to detect a variable relating to the movement of the object, the variable being at least one of position, speed, acceleration and applied force, and send a signal corresponding to the detected variable, a computer program stored on a storage arrangement, to be executed by a processing unit, configured to have the processing unit send a signal to a user interface for communicating an instruction to the patient through the user interface relating to moving the object, and have the processing unit compare an incoming signal of the detection arrangement relating to the movement of the object with the communicated instruction.

## Description

The invention concerns a rehabilitation device.

Rehabilitation therapy for people who have lost their ability to move due to an incident has proven relatively successful. It has been found that these people recover faster if they start intensive rehabilitation therapy as soon as possible after the incident. For example, for patients suffering from cerebrovasculair accident (CVA), such therapy has proven to be helpful. Such therapy is also useful for other movement disorders such as rheumatoid arthritis, Parkinson's disease, or sporting injuries.

If the therapy is given frequently, the patient may recover faster and better. Also, the therapy may be adapted to the needs of the patient. For example, at an early stage of the therapy it suffices to practice moving a certain limb. At a later stage the patient may have to practice a more controlled movement and/or apply a certain directed force. Social support staff, such as personal trainers, or therapists, may provide intensive and personally adapted rehabilitation therapy, through intensive personal training.

However, in practice the possibilities for providing intensive therapy are limited. The associated costs when providing intensive therapy are too high for the available budgets. Moreover, not enough personnel is available to provide intensive physical therapy for every patient. Therefore, patients may not get sufficient therapy or therapy of sufficient quality, resulting in relatively slow recovery or a relatively low quality of recovery.

It is one of the objects of the invention to provide for an alternative system that provides rehabilitation therapy.

This object and/or other objects may be achieved by the invention according to claim 1.

The rehabilitation device according to the invention may make use of a computer program for driving a rehabilitation device. A user interface may instruct the patient to perform certain actions that relate to moving an object. The patient may then move the object by actually grabbing and/or moving it. In this way, the patient exercises using physical objects, while receiving automated instructions. The device may offer therapy without needing social support staff.

In an embodiment, a user interface may offer a gaming or virtual reality environment, wherein the user may move virtual objects. A physical object may be associated with one of the virtual objects of the virtual reality environment, and/or may provide an input for the gaming environment. The user interface may instruct the patient to perform certain actions that relate to moving the physical objects. It has been proven that instead of following the trend of automating towards a further virtual environment, exercising in a real, physical environment with physical objects allows for an improved recovery process of the patient.

In an embodiment, the objects may form separate objects, mechanically uncoupled from the environment.

In clarification of the invention, further embodiments of the invention, and advantages thereof will be further elucidated in the claims and description, with reference to the drawings. In the drawings:
Fig. 1 shows an interactive rehabilitation device, in side view;
Fig. 2 shows another interactive rehabilitation device, in top view;
Fig. 3 shows a schematic diagram of an interactive rehabilitation device;
Fig. 4 shows a flow chart of steps in a method of rehabilitating a patient;
Fig. 5 shows an interactive rehabilitation device, in perspective view;
Fig. 6 shows an interactive rehabilitation device, in top view;
Fig. 7A and 7B show different objects with indicators, in perspective view;
Fig. 8A shows a top surface with an indicator, in perspective view;
Fig. 8B shows a bottom surface with a switch, in perspective view;
Fig. 8C shows a bottom surface with a switch and resilient elements, in perspective view;
Fig. 9 shows an embodiment of a switch arrangement, in perspective view;
Fig. 10 shows an effector and an object, in perspective view;
Fig. 11 shows an interactive rehabilitation device with multiple patients using the device;
Fig. 12 shows a diagram with multiple user interfaces, patients, and a therapist, connected to a network;
Fig. 13 shows a diagram of multiple patients and therapist connected to a network.

In this description, identical or corresponding areas have identical or corresponding reference numerals. The exemplary embodiments shown should not be construed to be limitative in any manner and serve merely as illustration. Any dimensions or relative dimensions may not be taken from the drawings.

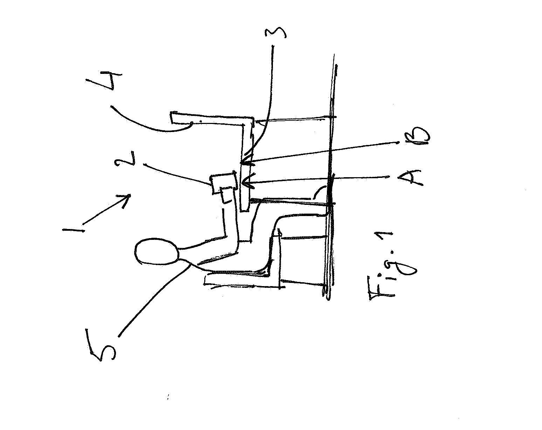

In Fig. 1 an exemplary embodiment of an interactive rehabilitation device 1 is shown in side view. The device 1 comprises a physical object 2 which is to be moved over a table top board 3. A user interface 4, in particular a graphical user interface, is also provided for giving instructions to a patient 5 having a movement disorder. These instructions may for example comprise graphical instructions. The graphical user interface may comprise a TFT display screen. By having the patient 5 move the object 2, for example in accordance with the instructions, the user interface 4 may provide feedback and give further instructions. While following these instructions the patient 5 is being subject to therapy.

In an embodiment the graphical instructions may comprise a visualisation of the action to be performed by the patient. For example, the graphical user interface may show an object being moved from a first location to a second location on a board. This virtual instruction may correspond to the instruction of moving the physical object 2 from a first physical location A to a second physical location B on the table top board 3.

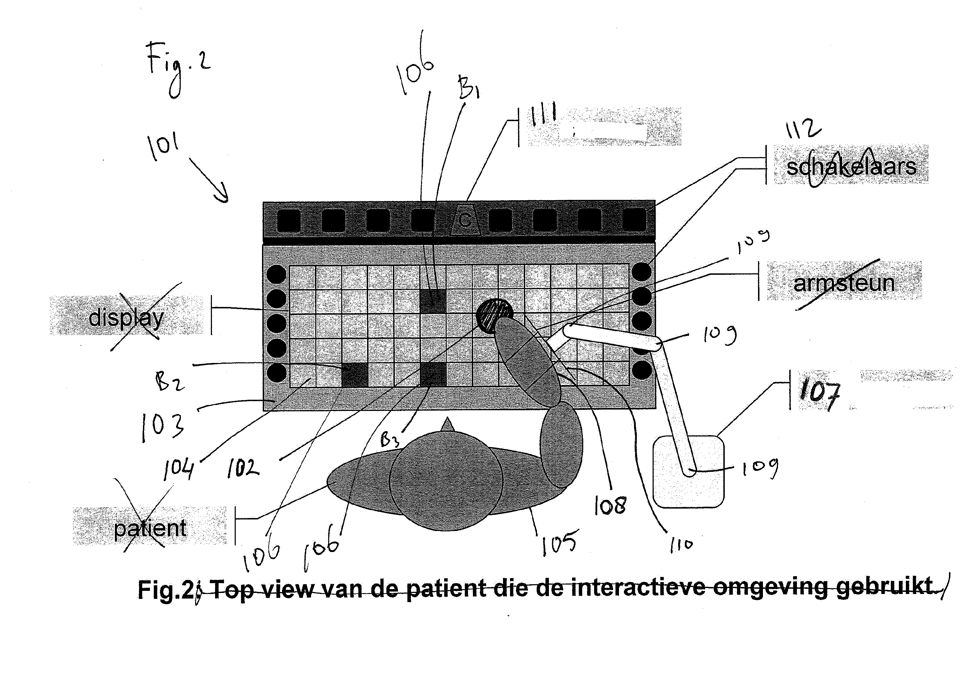

In Fig. 2 another exemplary embodiment of an interactive rehabilitation device 101 is shown, in top view. The interactive device 101 is provided with a physical object 102 to be moved over a table top board 103. The board 103 may comprise a user interface 104, in particular a graphical user interface, for giving instructions to the patient 105. The graphical user interface shown may comprise a flat screen, for example. In another embodiment, the user interface may comprise a virtual reality head mounted visual display, for example, wherein the virtual objects that are shown may correspond to, more particularly may be projected onto, the physical objects 102 to be moved by the patient 105 and/or the board 103. The virtual reality head mounted display may be arranged to allow the patient 105 to see the real physical environment as well as virtual images, which technique may be known as augmented reality. For example, while perceiving the virtual images, that may for example be projected onto the physical objects 102, the patient 105 may still see the objects 102 and/or his limbs and hands, or at least the contours thereof. For example, the virtual objects may correspond to more complex images such as person, while the physical objects may comprise less complex shapes, such as cubes. The patient 105 may perceive that he is moving a virtual person, while he is moving the physical object 102. The instructions may thus be received through the virtual reality head mounted display. In such an embodiment, the patient 105 may move the physical object 102, wherein feedback is received through the head mounted display by a corresponding movement of the respective virtual object. The graphical user interface 104 may be integrated with the board 103, for example by means of a horizontally placed flat screen, wherein locations to which to move the objects may be indicated directly on the board 103. For example, the interface 104 may comprise a number of visual markers 106, such as lights that are arranged under an at least partly transparent top surface of the board 103. The visual markers may for example comprise light emitting diodes or other light circuits. For example, when a light is emitting, this is meant to communicate to the patient 105 a location B1 on the board 103 to which to move the object 102. For example, also a number of locations B2, B3 could be indicated, to which to move the object 102 sequentially, as can be seen from Fig. 2.

The device 101 further comprises a manipulator 107 for supporting a limb, in particular an arm 108 of the patient 105. The patient 105 may for example not yet have the ability to keep his arm 108 in a lifted position on his own, for example, because the patient 105 may be in a relatively early recovery stage of a movement disorder such as for example cerebrovascular accident (CVA). The manipulator 107 may support the arm 108 at a certain level above the board 103, wherein the patient 105 may be able to move his arm 108 over the surface of the board 103. The patient 107 may then be able to grab the object 102 with his hand and move it to another location on the board 103, while being supported by the manipulator 106. The manipulator 107 may be provided with a number of pivoting points or joints 109 so that the patient 105 may reach any location on the board 103. The manipulator 107 may further be provided with a connection element 110 for connecting the arm 108 to the manipulator 107, for example the connection element 110 may comprise a band, belt, or ribbon or the like. The manipulator 107 may be equipped with a sensor system to measure the positions of the limbs of the patient and/or the forces exerted by the patient.

To detect the actual position and/or movements of the object 2, the device 101 may comprise a detection arrangement, for example comprising a camera 111. The camera 111 may for example comprise a digital camera and/or a webcam. Through said camera 111 the movements of the object 102 with respect to the board 103 can be detected. In other embodiments, the movement of the object 102 may be detected by measuring movement with respect to the manipulator 107, or with respect to the patient 105, or with respect to the camera 111. To this end the device 1 may be provided with detection software, for example pattern recognition software, which may be specifically configured to distinguish the object 102 from the environment. To enable recognition of the objects 102, the objects 102 may be provided with position markers, for example comprising a certain color, light and/or emitter. In another embodiment, the detection arrangement may comprise another detection arrangement, for example a radio frequency identification (RFID) reader, while the objects 102 may comprise passive RFID emitters. In other embodiments, the manipulator 107 and/or the patient 105 may comprise such emitter. In yet another embodiment, the detection arrangement and the objects 102 could comprise magnetic means for reading the position of the objects 102, wherein the magnetic reading means could for example be provided beneath the top surface of the board 103. In another embodiment, the board 103 and/or user interface 104 may be provided with a touch or proximity sensor, for instance the board 103 and/or user interface 104 may comprise a touch screen, a multi touch screen, so that the detection arrangement may be integrated with the user interface 104 and/or the board 103. The detection arrangement may be at least partly provided near the user interface 104.

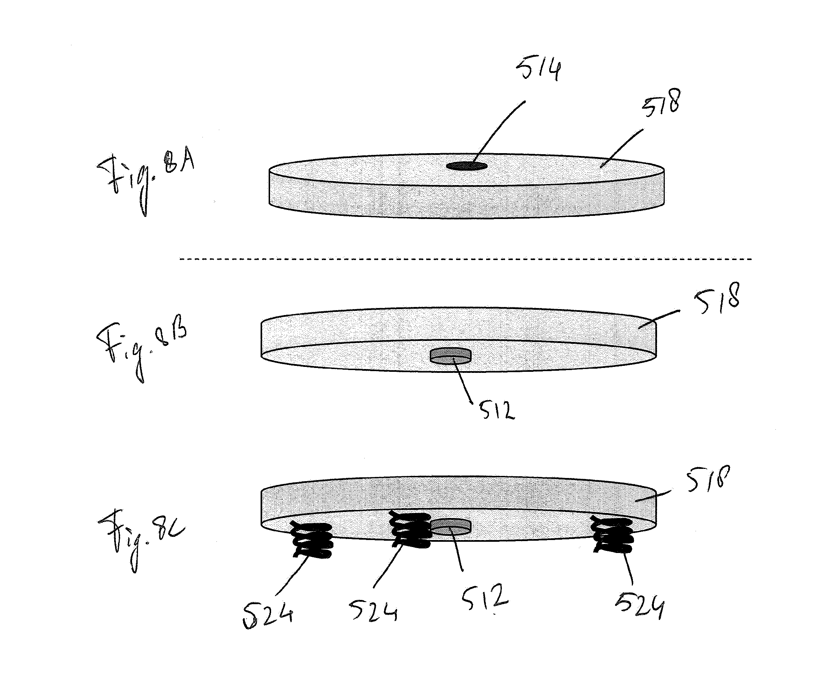

Furthermore, switches 112 may be provided. These switches 112 may for example comprise knobs, pull knobs or pushbuttons, and may serve for detecting that the patient 105 has reached a certain location. The switches 112 could also be integrated with one of the objects 102. In an embodiment, the switches 112 may for example be provided with a resisting element and/or a sensor, so that a certain resistance and/or force may be exerted while the patient operates the switch 112. Such a resisting element may for example comprise a resilient element. A force that is exerted to the switch 112 by the patient 105 may be measured by the sensor that is present in the switch 112. The switch 112 may for example be provided with different levels of resistance, wherein it is configured to detect that the user is able to exert a certain force at the location of the switch 112. The switches 112 may also be configured to sense touch, for example to detect that the user is able to reach a certain location. During therapy, the patient 105 may be challenged to press a sequence of switches 112. For example, the switches 112 may have to be operated between certain movement actions by the patient 105. In this way, the device 101 may have an indication of the time that it takes to perform one or more actions. Also, the switches 112 may for example be used to trigger a movement from the patient 105, for example a movement from the object 2 to the switch 112, or vice versa. Another type of switch 512 is shown in Fig. 8A-8C, which will be discussed further below.

In an embodiment, the device 101 comprises a board 103 that is arranged several decimetres above ground level. Preferably the board 103 is a part of, or is arranged like, a table top. This allows the patient 105 to sit behind the device 101 while operating it. Moreover, the device 101 will then form a relatively large part of the field of vision of the patient 105, and/or the board 103 may approximately be within an arms length reach.

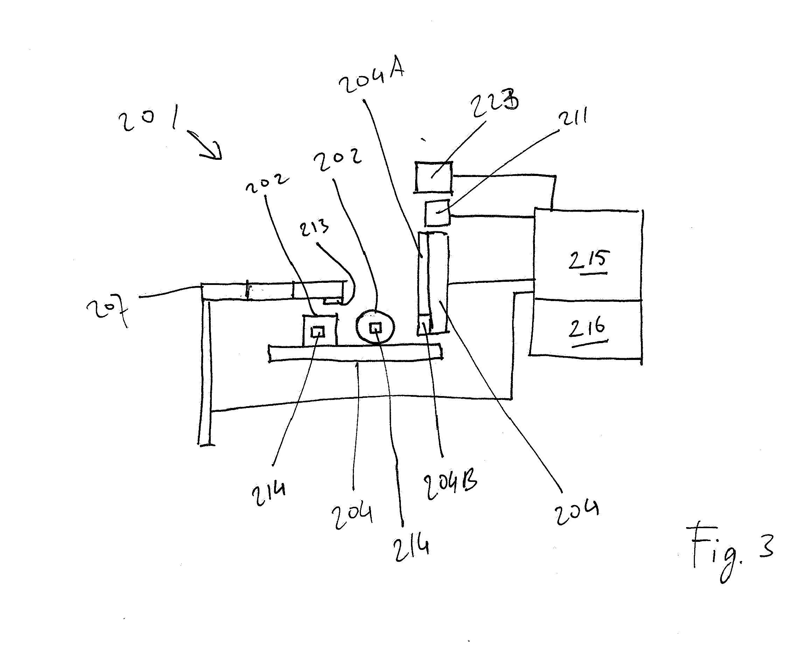

In Fig. 3 a schematic diagram of another exemplary device 201 is shown. The device 201 may be provided with two objects 202 to be moved along a board 203. A user interface 204 is provided, comprising a graphical user interface 204A such as a flat display screen and/or an audible user interface 204B, for example a speaker. A manipulator 207 may be provided for supporting an arm of the patient. The device 201 may be provided with an effector 213. The effector 213 may be arranged to connect the object 202 with the manipulator 207, for example in a case where the patient does not have the full ability to take hold of the respective object 202 long enough. In another embodiment, the effector 213 may for example be attached directly to the limb of the patient. For attaching an object 202 to the effector 213, the object 202 and the effector 213 may for example be provided with at least one magnetic coupling element. In another embodiment the effector 213 may for example comprise a mechanical coupling element, such as a clamp, or the like.

The objects 202 may each form a separate element that is mechanically uncoupled from the environment. The objects 202 may be moved separately from each other, for example in different directions. As can be seen the objects 202 can be readily distinguished from each other. For example, the objects 202 may differ amongst each other in shape, colour and/or texture. Therefore, each instruction that is communicated by the user interface 204 may be directed to a specific one of the different objects 202. Each object 202 may necessitate a different manner of handling, which may be advantageous for the recovery of the abilities of the patient. The objects 202 may comprise a position marker, for example on the outside of or within the objects 202. The position marker may be detected by a detection arrangement 211 so that also the position of the objects 202 is detected.

The objects 201 and/or the switch 112 may comprise an indicator 214. With the aid of a visual, auditive and/or vibrational indicator 214, the device 201 may indicate which object 202, or which switch 112, has to be moved. For example, the objects 202 may comprise a light to indicate which object 202 is to be moved, or the device 201 is provided with a light, for example a laser-like light source, to indicate which object 202 to move. Also, a graphical user interface, such as a flat screen panel for example, may be used to visualise which object 202 to move.

A processing unit such as a microprocessor 215 may be provided that is arranged to execute a computer program, and via which at least the user interface 204 and/or the manipulator 207 are controlled. The microprocessor is also connected to the detection arrangement 211 and/or an operating panel 223 for providing additional input to the device 201. The detection arrangement 211 may be configured to detect a variable relating to the movement of the object, the variable being position, speed, acceleration and/or applied force, and send a signal corresponding to the detected variable. From this signal, the microprocessor 215 may derive the position, speed and/or acceleration of the object 202 and/or the force applied to the object 202.

A force that is applied to the object 202 may for example be derived from the acceleration and/or the weight of the object 202. In another embodiment, certain resistance elements may be provided in and/or near the objects 202, and/or switches 112 could be provided for measuring applied forces, as already explained above. Forces may be measured through the manipulator 207, the objects 202, or via calculation using variables and constants, e.g. speed of movement and weight of object 202, respectively.

In an embodiment, positions of certain moving parts of the patient 105, such as the limbs, may be derived from a position sensor system in the manipulator or may be measured externally, for example using position markers that may be connected to the patient, combined with a detection arrangement for detecting said markers, or for example using a camera system provided with on board image processing for extracting the position of the limbs, or for example using a magnetic element to the body combined with a magnetic field sensor, or the like.

A computer program may be stored in a data carrier 216, which program is to be executed by the microprocessor 215. The data carrier 216 may for example be fixedly arranged in the device 201, or may be connected and/or disconnected to the device 201. The data carrier 216 may also be provided at a distant location, wherein the computer program may for example be loaded via a network such as the internet. For example, the computer program may comprise a set of predetermined instructions to be communicated to the patient, preferably via the user interface 204. The computer program may also comprise an algorithm through which the instructions to the patient 205 may be determined while executing the program, or the instructions could be determined by a therapist, for example via a network. In another embodiment, instructions may be given randomly. Thus, while executing the computer program, the microprocessor 215 may send a signal to the user interface 204 for communicating an instruction to the patient, relating to moving the object 202, out of said set of predetermined, calculated, entered or random instructions. This may trigger the patient to move the object 202 in the direction of the instructed location. For example, an instruction may comprise showing a visual marker on the user interface 104.

The computer program may comprise an algorithm for processing the detection arrangement 212 signal that is activated by movement of the object 202. To this end, the program may be configured so that the microprocessor 215 compares the incoming signal of the detection arrangement 211 with the communicated instruction. For example, the patient may not have moved the object 202, the patient may have moved the object 202 in the wrong direction, the patient may have moved the wrong object 202, the patient may have moved the object 202 in the right direction but has not reached the predetermined location, or the patient has been able to move the object 202 to the predetermined location, etcetera. After this, a second instruction may follow, which may be based on the comparison. For example, the level of difficulty may be set lower or higher depending on a state of recovery that is determined by the device 201 while the patient carries out the instructions. To this end, the computer program may be configured to determine a second instruction out of the set of predetermined instructions, based on said comparison. For example, a second instruction may have a lower level of difficulty than a first instruction because the patient was not able to carry out, or not able to fully carry out, the first instruction.

In an embodiment, the manipulator 207 is arranged to provide a force to said limb for at least partly aiding in and/or resisting to moving the respective object 202. For example, the movements of the patient may be slightly resisted. In this way, the muscles and/or movement control of the patient may be trained. This could for example be advantageous if the patient is in an advanced state of recovery. The manipulator 207 may be arranged to aid the patient in the moving the object 202. For example the patient may not be able to apply enough force to move the object 202. In such a case, the manipulator 207 may carry the respective limb or hand to the respective location, while preferably the patient slightly pushes or pulls the manipulator 207. For example, the manipulator 207 may be arranged to react to a relatively small force in a certain direction, by moving in that direction, so that the patient may only have to apply a relatively small force to move the object 202. This could for example be advantageous if the patient is in a relatively early stage of recovery, i.e. has shown little recovery. To drive the manipulator 207 to aid or resist in moving the object 202, it may be provided with actuators such as for example hydraulic and/or pneumatic pistons and/or electric motors.

For example, the level of force that is applied by the manipulator 207 may be dependent on a level that is set by the patient, the therapist, or by an operator. The height of the level that is set may be dependent on the movement disorder and/or the state of recovery of the patient, for example. When a patient is in an early state of recovery, i.e. has very low moving abilities, the manipulator 207 may apply forces in aiding the patient. For example, when a patient is in a advanced state of recovery, the manipulator 207 could apply a certain resistance to the movements of the limb of the patient.

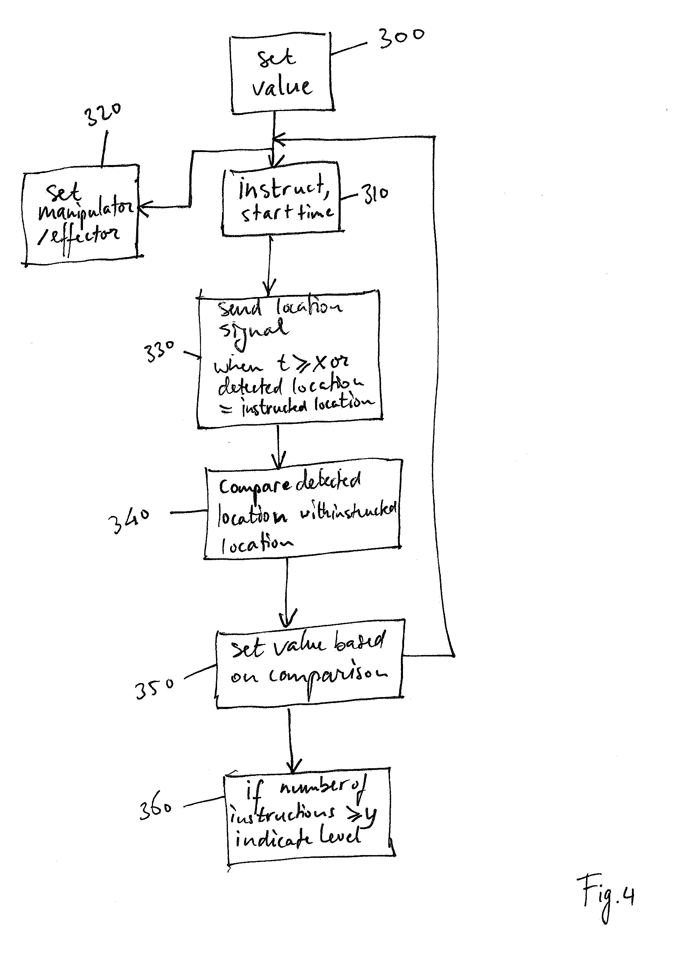

A method of rehabilitating a patient is disclosed by the flow chart of Fig. 4. In step 300, a preset value corresponding to a certain level may be loaded into the device 1, 101, 201. This value may for example relate to a particular moving disorder and/or level of recovery of the patient 5, 105. In an embodiment, patient data could be loaded into the device 1, 101, 201, so that the corresponding value can be loaded into the device 1, 101, 201. In yet another embodiment, the value can be set by the patient 5, 105, by a therapist and/or by an operator for example. In step 350, the value may be derived from one or more previous actions performed by the patient 5, 105 after having followed one or more previous instructions. In an embodiment, if no value is set, the device 1 may for example determine the value corresponding to the patient 5, 105 by first instructing the patient and determining the moving ability of the patient 5, 105 based on the detected movement, speed, acceleration and/or force, according to the same principle as step 350.

In step 310, an instruction is communicated to the patient 5, 105, relating to moving an object 2, 102, 202 or switch 112. The instruction may be less or more difficult to carry out for the patient 5, 105, wherein the level of difficulty of the instruction may for example depend on the value that was set in step 300 or 350. The level of difficulty may for example determine to the instructed type of object 2, 102, 202 to be moved and/or the instructed distance over which the respective object 2, 102, 202 is to be moved and/or the resistance that is being applied to the movement of the patient. When the instruction is given, a predetermined period of time may start running.

The level of difficulty may trigger a resistance and/or aiding force that is applied to the limb of the patient 5, 105. In step 320, a resistance and/or force that is applied to the limb of the patient 5, 105 is set for the manipulator 207 and/or the effector 213, based on the set value.

In response to above instruction, the patient 5, 105 may move the object 2, 102, 202. In step 330, the change of location of the object 2, 102, 202 may be detected by the detection arrangement 211. When the predetermined time period has passed a signal corresponding to the location is sent to the microprocessor 215 for comparison with the instructed location. When the object 2, 102, 202 has reached the instructed location before the time period has passed also a signal may be sent to the microprocessor 215. In step 340, the detected location is compared with the instructed location. For example, if the difference between the detected location and the instructed location was large, or if there was a difference, a level of difficulty may have been too high for the patient 5, 105. On the other hand, if the instructed location was reached before the predetermined time period has passed, a level of difficulty may have been too low. In step 350, based on the comparison, the value may or may not be reset, for example so that the level of difficulty of the instructions may be adjusted. In step 360, for example after a number of instructions have been carried out, the level of recovery corresponding to the value may be communicated to the patient 5, 105.

In an embodiment, the computer program is configured to perform above steps.

Instead of, or next to, a movement of the object 2, 102, 202 and/or switch 112, the detection arrangement 211 may for example be arranged to detect a certain force, speed and/or acceleration of the object 2, 102, 202 and/or switch 112.

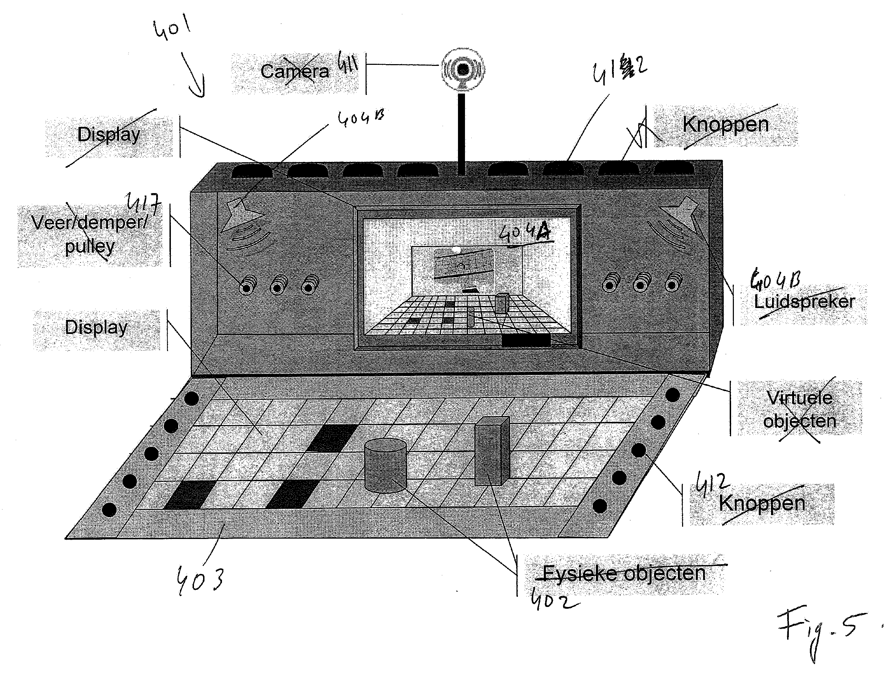

An exemplary embodiment is shown in Fig. 5, wherein the device 401 comprises several switches 412, for example pushbuttons, that may be actuated by the patient. A graphical user interface 404A is provided that instructs the patient how to move the objects 402 by displaying virtual images of the object 102, or virtual images of differently looking objects, in a moved position. Also an audible user interface 404B may be provided. Several actuating elements 417 may be provided to detect the force of the patient. For example, the actuating elements 417 may comprise resilient elements, a damper and/or a pulley. The detection arrangement may comprise a sensor that is connected to the actuating element 417 to detect a force of the patient. Further, two different objects 402 are provided, to be moved over a board 403, wherein the board 403 may also comprise a user interface 404 for indicating where to move the respective object 402, for example by using visual indicators. The detection arrangement may further comprise a camera 411 for detecting the objects 402 and/or a moving part of the patient, e.g. the hand.

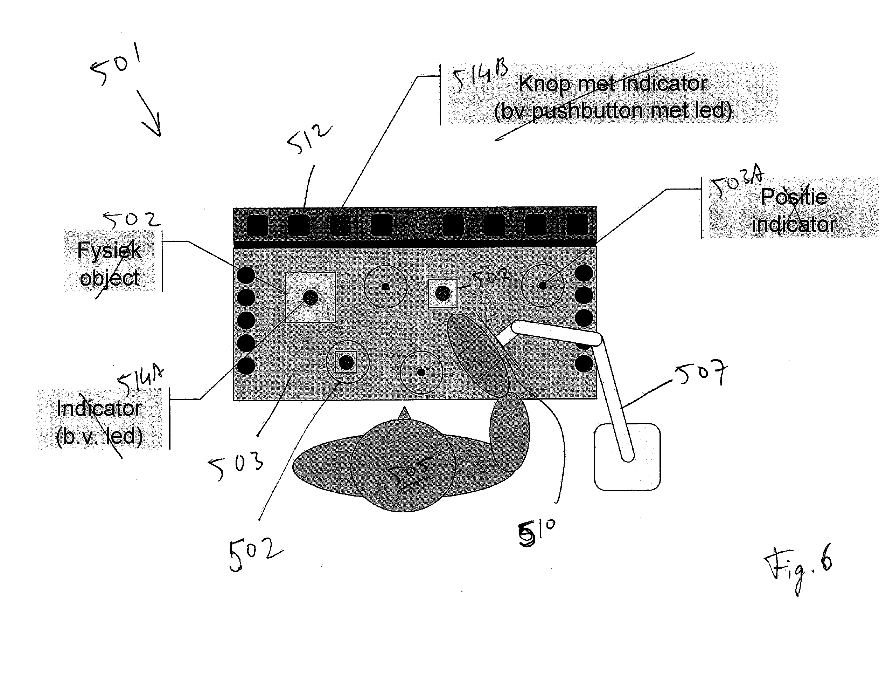

Yet another exemplary embodiment is disclosed in Fig. 6. Here, the device 501 is provided with a board 503 that is provided with visual markers 503A, for example a light element such as a light emitting diode, for indicating where to move a respective object 502. The objects 502 may be provided with visual indicators 514A, for indicating which object 502 to move. Furthermore, the switches 512 may be provided with indicators 514A, 514B, for indicating which switch to push or pull. The visual indicators 514A, 514B may also comprise a light element such as a light emitting diode that lights up when the respective object 502 is to be moved. The manipulator 507 is provided with a connection element 510 for connecting the arm to the manipulator 507.

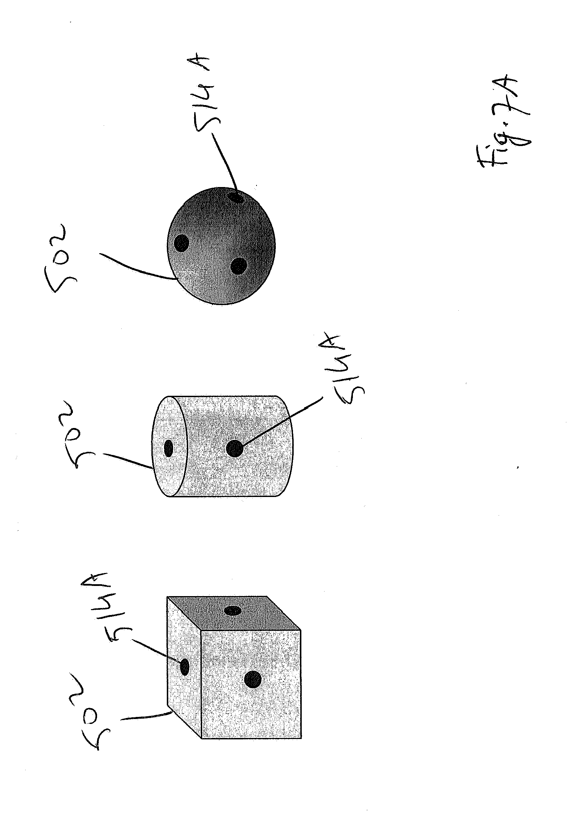

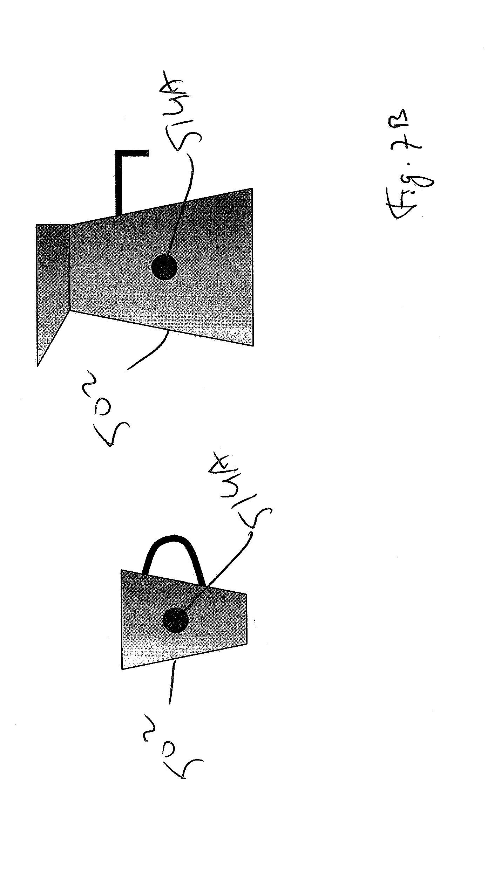

Examples of moveable objects 502 provided with visual indicators 514A are shown in Fig. 7A and 7B. These objects 502 may comprise any object 502, such as for example appliances, utensils or implements that are commonly used, as can be seen from Fig. 7B.

An example of an indicator 514 is shown in a perspective view from the top in Fig. 8A. The indicator 514 may for example be provided on an attachment surface 518, for example disc-shaped, for attachment to the or any object 202, or for integration with and/or attachment to a certain location of the device 1. The indicator 514 may comprise a light element, such as a light emitting diode. In Fig. 8B, a perspective view of the bottom of the attachment surface 518 is shown. As can be seen, the attachment surface 518 may comprise a switch element 512. The switch element 512 may be configured to sense a touch and/or movement of the disc. The switch element 512 may have any form to indicate a certain location, movement, displacement and/or force of the arm and/or hand of the patient. In an embodiment, the attachment surface 518 is provided with either an indicator 518 or a switch 512. In Fig. 8C a perspective view of the bottom of the attachment surface 518 is shown, having resilient elements 524, next to a switch 512. In an embodiment, a certain force may need to be exerted to the surface 518 and/or resilient elements 524 to activate the switch 524. The resilient elements 524 may comprise sensors to register an exerted force of the patient.

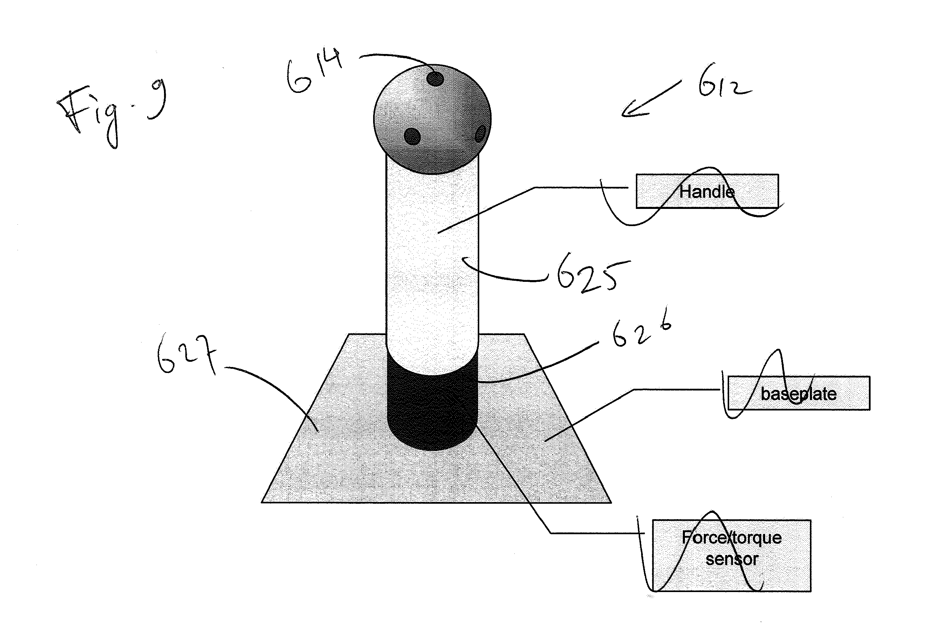

A switch arrangement 612 for determining a location and/or force of the patient is shown in Fig. 9. The switch arrangement 612 may comprise a handle 625. The handle 625 may comprise position indicators 614. The switch arrangement 612 may be provided with a force and/or torque detector 626 coupled to a base plate 627 and/or directly to a part of the device 1, the detector 626 preferably being electrically connected to the microprocessor 615 of the device 1. Furthermore, the switch arrangement 612 may function according to the same principle as the switch 112 and switch elements 512 explained above.

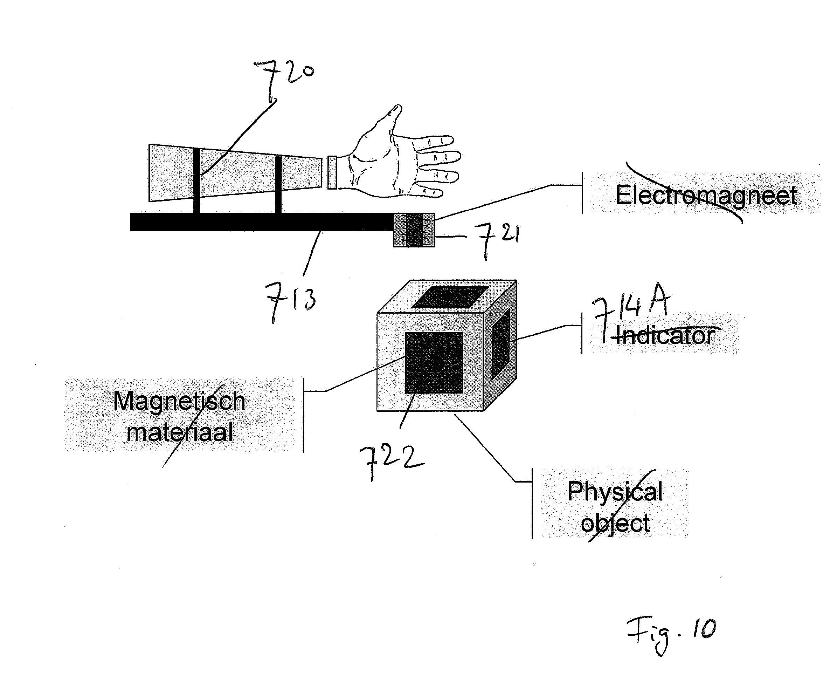

In Fig. 10, an embodiment is shown of an effector 713. The effector 713 may be provided with attachment elements 720 for attaching the effector 713 to an arm and/or hand of the patient. The effector 713 may further be provided with a coupling element 721 for coupling an object 702 with the patient. The coupling element 721 may for example comprise an electromagnet. The object 702 may comprise magnetic material 722 to be coupled to the coupling element 721 and an indicator 714A.

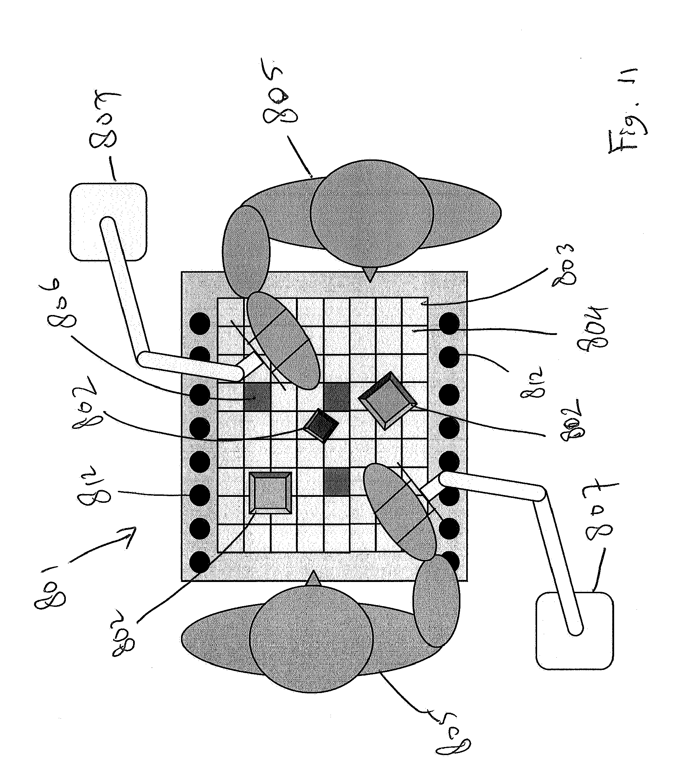

Fig. 11 shows an embodiment wherein multiple patients 805 receive therapy from one rehabilitation device 801. The device 1 may comprise multiple manipulators 807 for supporting the limbs of multiple patients 805. A user interface 804 may be integrated with the board 803, but may also be provided as a separated element. The device 1 may comprise multiple objects 802 that can be moved by the patient 805 over a board 803, wherein visual markers 806 may be provided for indicating to where to move the respective object 802. Furthermore, the device 1 may be provided with switches 812. The patients 805 may receive instructions through the user interface 804. Instructions may be configured so that the patients 805 are cooperating with and/or competing against each other, or at least interacting with each other, which may make therapy a relatively enjoyable experience for the patient 805.

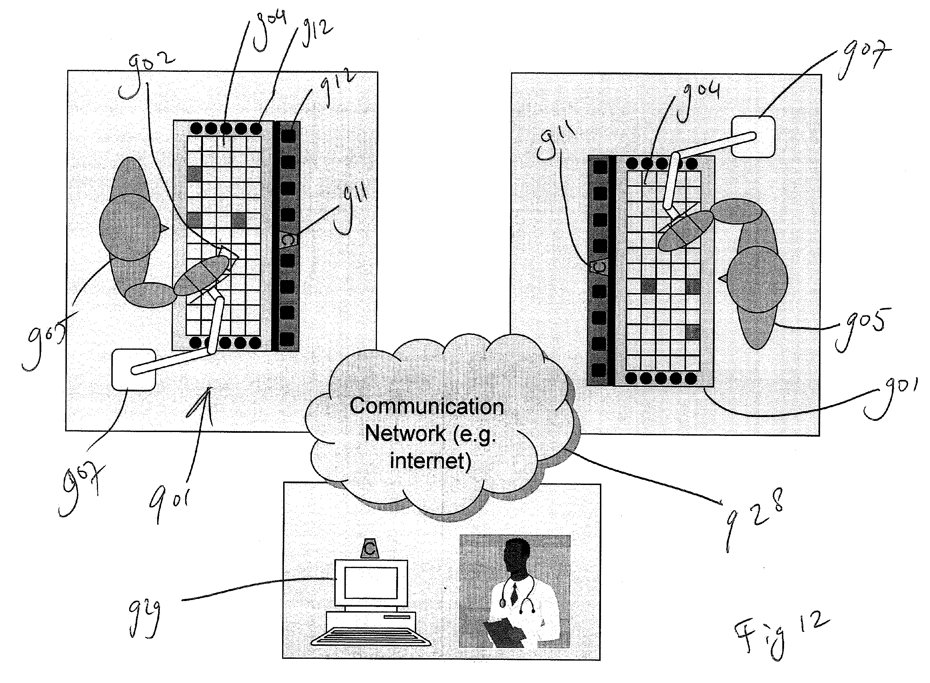

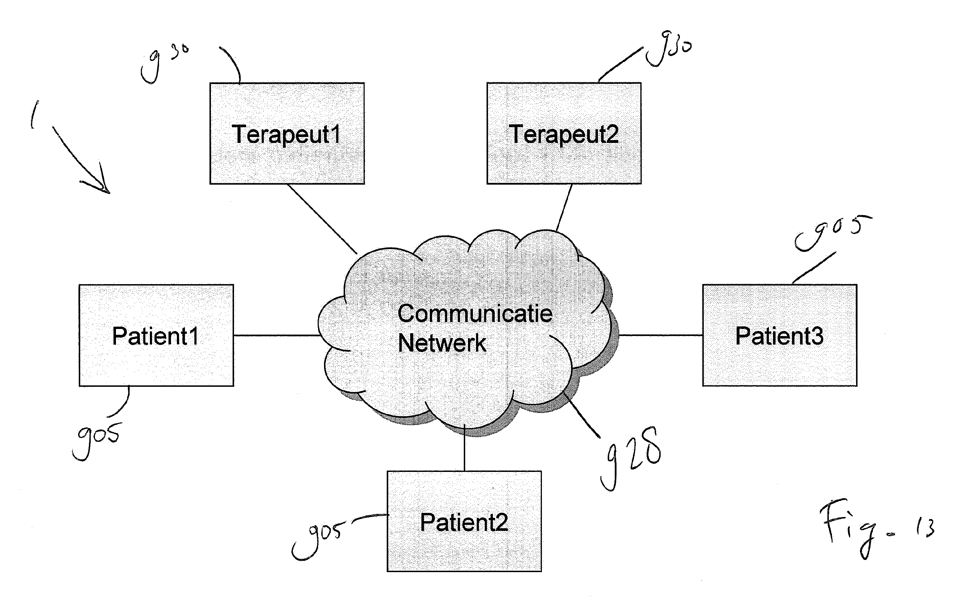

In another embodiment, the patients 905 may share a network environment, as shown in Fig. 12. For example, multiple user interfaces 904 and physical objects 902, may be provided that are connected to a network 928, wherein the interactive rehabilitation device computer program may be executed on a separate network computer 929. The patients 905 may collaborate and/or compete by moving virtual objects in the network environment by moving the physical objects 902. A detection arrangement 911, for example a camera, may detect the movement of the physical objects 902 and may send a signal to the network computer 929. For example, a virtual scene is being executed via the network 928. The virtual scene may consist of two virtual athletes, wherein two patients 905 that may each have their own interactive rehabilitation device 1 may associate their respective physical objects 902 with the respective virtual athletes. By moving the physical objects 902, the patients 905 may be able to control the movements and/or behavior of the virtual athletes and thus simulate for example a running contest. In an embodiment, one or multiple therapist 930 may be involved. For example, a therapist 930 may influence the instructions that are transmitted by the user interface 904 by changing or entering certain data into the network computer 929, for example either directly into the network computer 929, or from a different computer that is connected to the network 928. As shown in Fig. 13, multiple therapist 830 and/or patients 905 may be connected to the network 928, e.g. via internet, to instruct and/or rehabilitate, respectively, using the device 1.

In this description, an instruction relating to moving the object 2, 102, 202, 402, 502, 602 may for example comprise an instruction relating to the force to be applied to an object 2, 102, 202, 402, 502, 602 and/or switch 112, 412, 512, 612, 812, 912, an instruction related to the speed or acceleration to move the object 2, 102, 202, 402, 502, 602 and/or switch 112, 412, 512, 612, 812, 912, an instruction related to the location to which to move the object 2, 102, 202, 402, 502, 602 and/or switch 112, 412, 512, 612, 812, 912, an instruction related to adjusting the orientation of the object 2, 102, 202, 402, 502, 602 and/or switch 112, 412, 512, 612, 812, 912, and more. Position may be meant to comprise orientation as well as position. For example, a mere rotating of the object 2, 102, 202, 402, 502, 602 about its axis may also comprise a change of location of the object 2, 102, 202, 402, 502, 602.

It shall be obvious that the invention is not limited in any way to the embodiments that are represented in the description and the drawings. Many variations and combinations are possible within the framework of the invention as outlined by the claims. Combinations of one or more aspects of the embodiments or combinations of different embodiments are possible within the framework of the invention. All comparable variations are understood to fall within the framework of the invention as outlined by the claims.

## Claims

1. Interactive rehabilitation device, comprising
a physical object to be moved by a patient,
a detection arrangement configured to detect a variable relating to the movement of the object, the variable being at least one of position, speed, acceleration and applied force, and send a signal corresponding to the detected variable,
a computer program stored on a storage arrangement, to be executed by a processing unit, configured to
have the processing unit send a signal to a user interface for communicating an instruction to the patient through the user interface relating to moving the object, and
have the processing unit compare an incoming signal of the detection arrangement relating to the movement of the object with the communicated instruction.

2. Interactive rehabilitation device according to claim 1, wherein the program is configured to determine a second instruction based on said comparison.

3. Interactive rehabilitation device according to claim 1 or 2, wherein the device comprises
a user interface that is configured to communicate instructions to the patient relating to moving the object,
a processing unit that is provided with the program configured to compare the signal of the detection arrangement with the communicated instructions.

4. Interactive rehabilitation device according to any of the preceding claims, wherein the detection arrangement comprises a position detection arrangement for detecting the position of the object, and send a signal corresponding to the position of the object.

5. Interactive rehabilitation device according to claim 4, comprising a switch for detecting a position of a part of the patient and/or exerted force of the patient.

6. Interactive rehabilitation device according to any of the preceding claims, wherein the device comprises a board above ground level for moving the physical objects over said board.

7. Interactive rehabilitation device according to any of the preceding claims, wherein the object to be moved is a separate element that is mechanically uncoupled from the environment.

8. Interactive rehabilitation device according to any of the preceding claims, wherein at least two objects are provided, arranged to be moved separately from each other.

9. Interactive rehabilitation device according to claim 8, wherein said at least two objects are arranged so that they are distinguishable from each other.

10. Interactive rehabilitation device according to any of the preceding claims, wherein the user interface comprises a visual display.

11. Interactive rehabilitation device according to any of the preceding claims, wherein each object is provided with at least one indicator for indicating which object to move.

12. Interactive rehabilitation device according to any of the preceding claims, wherein a manipulator is provided that is arranged to at least partly support a limb of the patient.

13. Interactive rehabilitation device according to claim 12, wherein the manipulator is arranged for detecting the position of the supported limb.

14. Interactive rehabilitation device according to claim 12 or 13, wherein the manipulator is arranged to provide a force to said limb for at least partly aiding in and/or resisting to moving the respective object.

15. Interactive rehabilitation device according to any of the preceding claims, wherein an effector is provided for coupling the respective object to a limb of the patient.
